(19) **Europäisches Patentamt**

**European Patent Office**

**Office européen des brevets**

(11) **EP 1 446 435 B1**

(12) **EUROPEAN PATENT SPECIFICATION**

(45) Date of publication and mention
of the grant of the patent:
**02.03.2005 Bulletin 2005/09**

(51) Int Cl.7: **C08G 18/02**, C08G 18/78,
C08G 18/79

(21) Application number: **02761764.6**

(22) Date of filing: **20.09.2002**

(86) International application number:
**PCT/US2002/029938**

(87) International publication number:
**WO 2003/025040 (27.03.2003 Gazette 2003/13)**

(54) **PREPARATION AND USE OF BIURET-CONTAINING POLYISOCYANATES AS CROSS-LINKING AGENTS FOR COATINGS**

HERSTELLUNG UND VERWENDUNG EINES BIURETGRUPPEN ENTHALTENDEN POLYISOCYANATEN ALS VERNETZER FÜR BESCHICHTUNGEN

PREPARATION ET UTILISATION DE POLYISOCYANATES CONTENANT DU BIURET EN TANT QU'AGENTS DE RETICULATION POUR DES REVETEMENTS

(84) Designated Contracting States:
**AT BE BG CH CY CZ DE DK EE ES FI FR GB GR IE IT LI LU MC NL PT SE SK TR**

(30) Priority: **21.09.2001 US 324084 P**

(43) Date of publication of application:
**18.08.2004 Bulletin 2004/34**

(73) Proprietors:
• **E.I. DU PONT DE NEMOURS AND COMPANY**
**Wilmington, Delaware 19898 (US)**
• **Bayer Aktiengesellschaft**
**51386 Leverkusen (DE)**
• **Bayer Corporation**
**Pittsburgh, PA 15205-9741 (US)**

(72) Inventors:
• **ADAMS, Jerome, T.**
**Hockessin, DE 19707 (US)**

• **BARSOTTI, Robert, J.**
**Franklinville, NJ 08322 (US)**
• **LEWIN, Laura, A.**
**Greenville, DE 19807 (US)**
• **HALPAAP, Reinhard**
**51519 Odenthal (DE)**
• **MAGER, Dieter**
**51373 Leverkusen (DE)**
• **SHAFFER, Myron, W**
**New Cumberland, WV 26047 (US)**

(74) Representative: **Morf, Jan Stefan, Dr. Dipl.-Chem.**
**Abitz & Partner,**
**Poschingerstrasse 6**
**81679 München (Bogenhausen) (DE)**

(56) References cited:
**EP-A- 0 798 299** **GB-A- 2 073 764**
**US-A- 3 969 262**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 446 435 B1

**Description**

## BACKGROUND OF THE INVENTION

This invention relates to a process for the preparation of highly functional biuret group-containing polyisocyanates of low viscosity by reacting polyisocyanates having a functionality of at least 2.8 with water as the biuretizing agent. This invention also relates to the use of this biuret preparation as a curing agent in crosslinkable coating compositions, for example, clear coats and pigmented basecoats used for finishing and refinishing automobiles and trucks, to give fast curing low VOC (volatile organic content) coatings with superior crosslinking and mechanical and chemical properties.

Clear coat/color coat finishes for automobiles and trucks have been used in recent years and are very popular. Kurauchi et al U.S. Patent No. 4,728,543 issued March 1, 1988 and Benefiel et al U.S. Patent No. 3,639,147 issued February 1, 1972 show the application of a clear coat to a color coat or basecoat in a "wet on wet" application, i.e., the clear coat is applied before the color coat is completely cured. The clear coat/color coat systems, when used as an original finish or refinish on automobile or truck bodies, have outstanding gloss and excellent DOI (distinctness of image), providing the vehicle with a lustrous shiny appearance, and the clear coat is particularly important for these properties.

A number of solvent borne and water borne clear and pigmented coating compositions have been utilized as clear coat and basecoat finishes. One-pack or two-pack basecoats and clear coats comprising crosslinkable polyols, polyamines, and/or alkoxysilane polymers alongside polyisocyanate curing agents give excellent gloss and DOI. The use of polyisocyanate curing agents having an isocyanate functionality of 3 or higher are particularly preferred, as they form faster films at ambient or slightly elevated temperatures and improve the crosslinking and mechanical and chemical properties of the film. However, the standard approach of increasing functionality of polyisocyanates through the prepolymer route results in molecules of high molecular weight and high viscosity that require further dilution with solvents to form sprayable coatings and result in increased VOCs. This approach also requires a significant excess of isocyanate, which results in an undesirable mixture of products. Moreover, the prepolymers that are formed are difficult to handle, given that they undergo viscosity increases upon aging.

There is a need for higher functional polyisocyanate molecules that are colorless, storage stable, and easy to prepare, and which on synthesis do not form materials of high molecular weight and high viscosity. Such molecules would, for example, enable the formulation of low VOC high solids coatings which meet today's pollution requirements, and provide coatings that are fast curing and have superior crosslinking and mechanical and chemical properties and excellent gloss and DOI. Such a combination of properties, however, is not provided by the prior art polyisocyanate curing agents. The present invention provides polyisocyanates with the aforementioned described characteristics.

Numerous patents disclose methods for the preparation of polyisocyanates containing one or more biuret groups from diisocyanates, which employ water as the biuretizing agent. However, none show use of higher functional polyisocyanates as the starting material where water is used as the only biuretizing agent.

## SUMMARY OF THE INVENTION

The present invention provides for preparation and use of biuret group-containing polyisocyanates having a compact, highly functional structure, of low viscosity, as curing agents in coatings.

The process for preparing the biuret group-containing polyisocyanate having a functionality of at least 4 and a number average molecular weight of about 500 to 3,000, comprises reacting a polyisocyanate adduct which

a) is prepared from an aliphatic, cycloaliphatic, or aromatic diisocyanate (preferably from 1,6-hexamethylene diisocyanate);

b) has an average isocyanate functionality of at least 2.8; and

c) contains either isocyanurate or iminooxadiazine dione groups, provided that a total of at least 50 mole percent, based on the total moles of isocyanate adduct groups present in the polyisocyanate adduct, of isocyanurate and iminooxadiazine dione groups are present,

with 0.01 to 0.15 moles of water or a mixture of up to 50 mole percent, based on the total moles of biuretizing agent, of biuretizing agents other than tertiary alcohols for each equivalent of isocyanate groups in the polyisocyanate adducts at a temperature of 50 to 180°C to incorporate biuret groups into the polyisocyanate adduct.

Biuret group-containing polyisocyanates prepared by the forgoing process are also a part of this invention. These materials can be used as is or with standard blocking agents.

Crosslinkable coating composition containing a film-forming binder are also a part of this invention, wherein the binder contains

    a) an oligomer or polymer or dispersed gelled polymer having functional groups capable of reacting with isocyanate groups on component (b); and

    b) a blocked or unblocked biuret group-containing polyisocyanate curing agent of the forgoing character with a functionality of at least 4 and a number average molecular weight of about 500 to 3,000.

## DETAILED DESCRIPTION OF THE INVENTION

All molecular weights referred to herein are determined by GPC (gel permeation technology) using polystyrene as the standard.

Also in this disclosure, the adjective "biuret group-containing" indicates that the compounds it describes have a content of biuret groups.

Suitable starting polyisocyanates for preparing the polyisocyanates of the present invention are polyisocyanate adducts which

    a) are prepared from aliphatic, cycloaliphatic, or aromatic diisocyanates, preferably aliphatic diisocyanates and more preferably 1,6-hexamethylene diisocyanate;

    b) have an average isocyanate functionality of at least 2.8, preferably at least 3.0 and more preferably at least 3.2; and

    c) contain either isocyanurate or iminooxadiazine dione groups, provided that a total of at least 50 mole percent, preferably at least 60 mole percent and more preferably at least 75 mole percent, based on the total moles of isocyanate adduct groups present in the starting polyisocyanate adducts, of isocyanurate and iminooxadiazine dione groups are present.

The preceding mole percents are based on the total moles of isocyanurate and iminooxadiazine dione groups. As indicated above, each group may be present alone or in admixture with the other. In one preferred embodiment iminooxadiazine dione groups are present in admixture with the isocyanurate groups in an amount of at least 10 mole percent, preferably at least 15 mole percent and more preferably at least 20 mole percent, based on the total moles of iminooxadiazine dione and isocyanurate groups.

The starting polyisocyanate adducts preferably have an NCO content of 10 to 25% by weight, more preferably 12 to 25% by weight and most preferably 15 to 25% by weight; and preferably have an upper limit for the functionality of 8, more preferably 7 and most preferably 6. The starting material to prepare the polyisocyanate adducts preferably contains at least 70% by weight, more preferably at least 80% by weight and most preferably at least 90% by weight of diisocyanate (a), preferably 1,6-hexamethylene diisocyanate. Other isocyanate adduct groups that may be present in the polyisocyanate adducts include uretdione, biuret, urethane, allophanate, carbodiimide and/or oxadiazinetrione, preferably uretdione, biuret, urethane and/or allophanate groups.

Starting polyisocyanate adducts containing isocyanurate groups are known and may be prepared in accordance with the teachings of U.S. Patent 4,324,879, herein incorporated by reference. In the present invention, these adducts are generally preferred as the starting materials. Typically useful examples of such polyisocyanate adducts containing isocyanurate groups are trimers formed from any of the conventional aliphatic, cycloaliphatic, and aromatic diisocyanates that are listed below. Trimers of aliphatic diisocyanates, such as the trimer of 1,6-hexamethylene diisocyanate which is sold under the tradename Desmodur® N-3390, are most preferred.

Starting polyisocyanate adducts containing iminooxadiazine dione and optionally isocyanurate groups are also known and may be prepared in the presence of special fluorine-containing catalysts as described in U.S. Patents 5,914,383, 6,107,484 and 6,090,939, herein incorporated by reference.

Other adduct groups may be incorporated in known manner either by separately preparing these adducts and then blending them with the polyisocyanate adducts containing isocyanurate and/or iminooxadiazine dione groups or by simultaneously preparing the other adduct groups.

For example, starting polyisocyanate adducts containing isocyanurate groups and allophanate groups may be prepared simultaneously in accordance with the processes set forth in U.S. Patents 5,124,427, 5,208,334 and 5,235,018, the disclosures of which are herein incorporated by reference. Examples of other starting polyisocyanate adducts are those containing isocyanurate and urethane groups which may be prepared simultaneously from an organic polyisocyanate and a polyol. Any of the diisocyanates listed below can be used with a polyol to form such an adduct.

Polyols such as trimethylol alkanes like trimethylol propane or ethane can be used. One useful adduct is the reaction product of tetramethylxylidene diisocyanate and trimethylol propane and is sold under the tradename of Cythane® 3160.

Suitable methods for preparing polyisocyanate adducts containing uretdione groups, urethane groups, allophanate groups, carbodiimide groups and oxadiazinetrione groups for subsequent blending with the polyisocyanates containing isocyanurate and/or iminooxadiazinedione groups to form the starting polyisocyanate adducts are described in U.S. Patent 6,096,823, the disclosure of which is herein incorporated by reference. These known polyisocyanate adducts may also be blended with the polyisocyanates containing biuret groups according to the invention depending upon the particular application needs.

Any of the conventional aliphatic, cycloaliphatic, and aromatic diisocyanates can be used to form any of the starting polyisocyanate adducts listed above. Typically useful diisocyanates include, without limitation, 1,6-hexamethylene diisocyanate, isophorone diisocyanate, 4,4'-biphenylene diisocyanate, toluene diisocyanate, bis cyclohexyl diisocyanate, tetramethylene xylene diisocyanate, ethyl ethylene diisocyanate, 2,3-dimethyl ethylene diisocyanate, 1-methyltrimethylene diisocyanate, 1,3-cyclopenthylene diisocyanate, 1,4-cyclohexylene diisocyanate, 1,3-phenylene diisocyanante, 1,5-naphthalene diisocyanate, bis-(4-isocyanatocyclohexyl)-methane, diisocyanatodiphenyl ether and the like. As indicated above, among the starting polyisocyanate adducts, those containing primarily isocyanurate groups are most preferred.

To prepare the polyisocyanates containing biuret groups according to the present invention the starting polyisocyanate adducts are reacted in the presence of water as a biuretizing agent, optionally in an admixture with other known biuretizing agents other than tertiary alcohols. The other known biuretizing agents may be present in amounts of up to 50 mole percent, preferably up to 20 mole percent, based on the total moles of biuretizing agent. Most preferably water is used as the sole biuretizing agent. Suitable processes are disclosed in U.S. Patents 3,124,605 and 3,903,127, the disclosures of which-are herein incorporated by reference. The biuretizing agent is used in an amount sufficient to provide 0.01 to 0.15 moles, preferably 0.025 to 0.12 moles and more preferably 0.03 to 0.1 moles of biuretizing agent for each equivalent of isocyanate groups in the starting polyisocyanate adducts. The reaction is carried out at a temperature of 50 to 180°C, preferably 60 to 160°C and more preferably 70 to 140°C, until all of the biuretizing agent has reacted.

The resulting polyisocyanate has an isocyanate functionality, which is calculated as described below, of at least 4, preferably at least 4.5 and more preferably at least 4.8 and an NCO content of 10 to 24% by weight, preferably 12 to 22% by weight and more preferably 14 to 20% by weight, based on the weight of the polyisocyanate. The resulting polyisocyanates preferably have a maximum functionality of 10, more preferably 8 and most preferably 7. The products can be suitably reduced in solvent for use.

The functionality of the product is calculated on the basis of the functionality of the starting polyisocyanate adduct, which is generally measured by GPC, and the amount of water used. In determining the functionality according to the following equation, the biuretizing agent is trifunctional since one mole of biuretizing agent and three isocyanate groups are required to form one biuret group:

$$F = NCO\ Equiv/Moles = \frac{Eq\ NCO - Eq\ biuretizing\ agent}{(Eq\ NCO/F_i) - 2 \times moles\ biuretizing\ agent}$$

wherein

$F_i$ = functionality of starting polyisocyanate adduct

Eq water = moles biuretizing agent x 3.

The molecular weight of the product is calculated by GPC using polystyrene as the standard. The resulting biuret-group containing polyisocyanate has a number average molecular weight of about 500-3,000, preferably about 500-2,500 and most preferably 500-2,200.

Using the process of the invention, the biuret group-containing polyisocyanate can be prepared either continuously or batchwise.

The products obtained by this process are distinguished in particular in that they couple comparatively low viscosity and low molecular weight with a high isocyanate functionality and a high reactivity with respect to binders employed in coatings, said binders containing isocyanate-reactive groups and being, for example, hydroxyl-containing polyacrylates. Other advantages are that they are easy to prepare, the content of volatile isocyanates do not rise even on prolonged storage as these compounds are stable to breakdown to monomer, they contain standard isocyanate groups which do not require additional regulatory clearance, and that the products are storage stable with respect to viscosity increases and are substantially colorless, which is especially important for clear coat systems.

The products obtained by the process are particularly suitable as curing agents in coating compositions, especially in automotive coatings. In such applications, the products may be used as is or may be blocked with any of the conventional blocking agents. Such products are also a part of this invention. Typical blocking agents are alcohols, ketimines, oximes and the like. Blocking agents are normally employed when formulating one-pack coatings.

The coating compositions of this invention generally contain a film-forming binder which comprises an isocyanate-reactive oligomer or polymer or dispersed gelled polymer, and a blocked or unblocked biuret group-containing polyisocyanate curing agent as described above.

The coating compositions of this invention preferably are formulated into one- or two-pack liquid solvent borne or water borne coating compositions. Although the compositions are preferably liquid coating compositions, they may be formulated into powder coating compositions as well.

The coating compositions of this invention are particularly useful for finishing the exterior of automobile and truck bodies. Depending on its use, the present composition is capable of providing a coating which is durable, is fast curing, has excellent adhesion to previously painted substrates, has superior crosslinking and excellent resistance to chemical attack and environmental weathering, and imparts a superior glossy appearance for an extended period.

A typical steel auto or truck body has several layers of coatings. The steel is typically first coated with an inorganic rust-proofing zinc or iron phosphate layer over which a primer coating is applied which is typically an electrocoated primer or can be a repair primer. A typical electrocoat primer comprises a cathodically depositable epoxy modified resin that is crosslinked with a polyisocyanate. A typical repair primer comprises an alkyd resin. Optionally, a primer surfacer and/or sealer can be applied over the primer coating to provide for better appearance and/or improved adhesion of the basecoat to the primer coat. A pigmented basecoat or color coat is next applied over the primer surfacer. A typical basecoat comprises a pigment, which may include metallic flakes in the case of a metallic finish, and polyester or acrylourethane as a film-forming binder. A clear topcoat (clearcoat) is then applied to the pigmented basecoat (colorcoat). The color coat and clearcoat are preferably applied to have a dry film thickness of about 0.1-3 mils and 0.5-5.0 mils, respectively. A composition of this invention, depending on the presence of pigments or other conventional components, may be used as a basecoat, clearcoat, or even as an undercoat such as a primer or sealer.

When the present composition is used as a solvent borne coating, the biuret-containing polyisocyanates described above are particularly useful in formulating fast curing low VOC high solids solvent borne clearcoat compositions for clear coat/color coat finishes for automobiles and trucks. The inclusion of compact, highly functional, biuret group-containing polyisocyanate curing agent of low viscosity results in: increased cure rate of the coating and improved productivity; superior crosslinking; improved resistance to chemical attack and environmental weathering; and low VOC formulations, since these biurets have high isocyanate functionality without forming high molecular weight and high viscosity materials, which would require further dilution with solvents for spraying and thereby increase the VOC content of the composition.

A typical solvent borne coating composition of this invention useful for finishing or refinishing clear coat/color coat finishes for automobiles and trucks contains about 10-60% by weight of an organic liquid carrier and correspondingly, about 40-90% by weight of film forming binder. Preferably, the coating composition is a high solids composition that contains about 50-80% by weight of film-forming binder and 20-50% by weight of the organic liquid carrier. The coating composition is also preferably a low VOC composition that has a VOC content of less than 5 pounds of solvent per gallon and preferably in the range of about 2.0 to 4.5 pounds of solvent per gallon of coating composition, as determined under the procedure provide in ASTM D-3960. The binder contains about 10-90% by weight of a polymer or oligomer or dispersed gelled polymer having functional components that are capable of reacting with isocyanate groups on the polyisocyanate crosslinking agent which comprises about 10-90% by weight of the binder.

As indicated above, the coating composition is particularly suited for use as a clear coat in automotive refinishing and finishing but can be pigmented with conventional pigments and used as a monocoat or as basecoat or even as an undercoat such as a primer or sealer. These coatings may also be used in non-automotive applications such as in industrial and architectural applications.

The oligomers useful in the coating composition have functional components capable of reacting with the isocyanate groups and a weight average molecular weight of about 200-2,000 and a polydispersity of less than 1.7.

Typically useful oligomers include hydroxy functional caprolactone oligomers which may be made by reacting caprolactone with a cyclic polyol. Particularly useful caprolactone oligomers are described on col. 4., line 3 - col. 5, line 2 of Lamb et al U.S. Patent 5,286,782 issued Feb. 15, 1994, the disclosure of which is herein incorporated by reference. Other useful hydroxy functional oligomers are polyester oligomers such as an oligomer of an alkylene glycol, like propylene glycol, an alkane diol, like hexane diol, and an anhydride like methyl hexahydrophthalic anhydride reacted to a low acid number. These oligomers are described in Barsotti et al U.S. Patent 6,221,494 issued Apr. 24, 2001, the disclosure of which is herein incorporated by reference. Other useful oligomers are hydroxy functional and are formed by reacting a monofunctional epoxy such as 1,2 epoxy butane with the below described acid functional oligomers using triethyl amine as a reaction catalyst resulting in very low (less than 20) acid number oligomers. The acid functional oligomers that are used as precursors for the hydroxy functional oligomers include, for example, an oligomer of a polyol such as pentaerythritol reacted with an anhydride such as methyl hexahydrophthalic anhydride to an acid number of about 30-300, preferably 150-250. The forgoing hydroxyl functional oligomers are described in Barsotti et al WO 99/05193 published Feb. 4, 1999, herein incorporated by reference.

Additional reactive oligomers include reactive silicon oligomers having a linear or branched cycloaliphatic moiety and at least two functional groups with at least one being a silane or a silicate group, the remaining being a hydroxyl group. Such silicon oligomers are described in Barsotti et al WO 99/40140 published Aug. 12, 1999, herein incorporated by reference. Other reactive oligomers include aldimine oligomers which are the reaction products of alkyl aldehydes, such as, isobutyraldehyde with diamines, such as isophorone diamine. Ketimine oligomers which are the reaction product of alkyl ketones, such as, methyl isobutyl ketone with diamines, such as, 2-methyl pentamethylene diamine. Polyaspartic esters, which are the reaction product of diamines, such as, isopherone diamine with dialkyl maleates, such as, diethyl maleate. Other useful oligomers are described in Barsotti et al WO 97/44402 published Nov. 27,1997, the disclosure of which is herein incorporated by reference. All of the foregoing additional molecules are well known in the art.

Besides the oligomers, the binder for the coating composition may be an acrylic polymer or polyester having functional components capable of reacting with isocyanate groups. It is preferred to use such polymers in combination with any of the aforementioned oligomers for improved film integrity.

Typically useful acrylic polymers include acrylic polyols having a weight average molecular weight in the range from 2,000 to 50,000, preferably 3,000 to 20,000 and a Tg preferably in the range of 0°C to 80°C, which are made from typical monomers such as acrylates, methacrylates, styrene and the like and functional monomers such as hydroxy ethyl acrylate, glycidyl methacrylate, or gamma methacryly propyl trimethoxy silane, t-butyl amino ethyl methacrylate, and the like. The details of acrylic polymers suitable for use in this invention are provided in Lamb et al. U.S. Patent 5,286,782 issued Feb. 15, 1994, herein incorporated by reference.

A typical acrylic polymer is composed of polymerized monomers of styrene, a methacrylate which is either methyl methacrylate, isobornyl methacrylate, cyclohexyl methacrylate, or a mixture of these monomers and a second methacrylate monomer which is either isobutyl methacrylate, n-butyl methacrylate or ethyl hexyl methacrylate or a mixture of these monomers and a hydroxyl alkyl methacrylate or acrylate that has 1-4 carbon atoms in the alkyl group such as hydroxyl ethyl methacrylate, hydroxy propyl methacrylate, hydroxy butyl methacrylate, hydroxy ethyl acrylate, hydroxy propyl acrylate, hydroxyl butyl acrylate and the like.

One such acrylic polymer contains about 5-20% by weight of styrene, 10-30% by weight of the methacrylate, 30-60% by weight of the second methacrylate and 10-30% by weight of the hydroxy alkyl methacrylate. The total percentage of the monomers in the polymer equal 100%.

Another such acrylic polymer contains the following constituents in the above percentage ranges: styrene, methyl methacrylate, isobutyl methacrylate or n-butyl methacrylate and hydroxy ethyl methacrylate.

Another such acrylic polymer contains the following constituents in the above percentage ranges: styrene, methyl methacrylate, isobornyl methacrylate, 2-ethyl hexyl methacrylate, isobutyl methacrylate and hydroxy ethyl methacrylate.

Other useful acrylic polymers include acrylosilane polymers can also be used having a weight average molecular weight in the range from about 1,000 to 10,000, which are made from typical monomers such as mathacrylates, acrylates, styrene, and functional monomers, such as hydroxy alkyl acrylate, hydroxy alkyl methacrylate, and an ethylenically unsaturated hydroxy functional acrylosilane.

One typical acrylosilane polymer is the polymerization product of an alkyl methacrylate, an alkyl acrylate each having 1-8 carbon atoms in the alkyl group, isobornyl methacrylate, styrene, hydroxy alkyl methacrylate having 1-4 carbon atoms in the alkyl group, and 5-40% by weight of an ethylenically unsaturated silane containing monomer, including alkoxysilanes such as vinylalkoxy silanes, for example, vinyl trimethoxy silane, vinyl triethoxy silane and vinyl tris (2-methoxyethoxy) silane, and the like. Other useful silane monomers are acyloxysilanes, including acrylatoxy silane, methacrylatoxy silane and vinylacetoxy silanes, such as vinylmethyl diacetoxy silane, acrylatopropyl triacetoxy silane, and methacrylatopropyltriacetoxy silane, and any mixtures thereof. The details of acrylosilane polymers useful herein are described in Lewin et al U.S. Patent 5,684,084 issued Nov. 4, 1997, herein incorporated by reference.

Typically useful polyesters include polyester polyols having a weight average molecular weight in the range from 1,000 to 50,000, preferably from 2,000 to 5000 and a Tg preferably in the range from -50°C to 100°C. The polyesters suitable for use in the invention are conventionally polymerized from suitable polyacids, including cycloaliphatic polycarboxylic acids, and suitable polyols, which include polyhydric alcohols. The details of polyesters suitable for use in this invention are provided in Hoffmann et al U.S. Patent 5,326,820 issued Jul. 5,1994, herein incorporated by reference. One of the commercially available polyester, which is particularly preferred, is SCD® -1040 polyester, which is supplied by Etna Product Inc., Chagrin Falls, Ohio.

Other film-forming polymers can also be used such as polyurethane polyols, acrylourethanes, polyester urethanes and polyether urethanes, and the like.

Dispersed gelled polymers (non aqueous dispersions) containing functional groups capable of reacting with isocyanate groups can also be used in the coating composition, preferably dispersed gelled acrylic polymers. Examples of hydroxy functional dispersed gelled acrylic polymers include acrylic polymers which have a core formed from polymerized monomers of methyl methacrylate, glycidyl methacrylate, methacrylic acid, methyl acrylate and stabilizing polymeric components formed from a macromonomer of styrene, butyl methacrylate, butyl acrylate, hydroxy ethyl acrylate, methacrylic acid, isobornyl methacrylate, and glycidyl methacrylate. The core is formed from a high molecular weight polymer having a weight average molecular weight of 50,000 to 500,000, preferably in the range of from 50,000 to 200,000. The arms make up about 10 to 90 percent of the polymer and are formed from low molecular weight macromonomer having an average molecular weight of in the range from about 500 to 20,000, preferably 3,000 to 20,000. The details of dispersed gelled polymers which can be used in the present composition are provided in Barsotti et al. U.S. Patent 5,763,528 (see Examples 1 and 2), herein incorporated by reference.

Compatible mixtures of any of the aforementioned oligomers or polymers or dispersed gelled polymers can also be used.

The polyisocyanate curing agent used in the coating composition is the biuret group-containing polyisocyanate described above. The polyisocyanate is generally provided in an effective amount to rapidly cure the coating under ambient conditions (20°C). The isocyanate reactive and polyisocyanate components (A) and (B), respectively are preferably employed in an equivalent ratio of isocyanate groups to hydroxyl groups of 0.5/1 to 3.0/1, more preferably 0.8/1 to 2.0/1. This usually translates to a polyisocyanate content (B) in the binder within the above stated range. As described above, the polyisocyanate may be blocked or unblocked.

Optionally, the polyisocyanate curing agent described above can be combined with other conventional organic polyisocyanate crosslinking agents to enhance the film forming ability of the coating composition.

Any of the conventional aromatic, aliphatic, cycloaliphatic, diisocyanates, trifunctional isocyanates and isocyanate functional adducts of a polyol and a diisocyanate can be used. Typically useful diisocyanates include those listed above, such as 1,6-hexamethylene diisocyanate, isophorone diisocyanate, 4,4'-biphenylene diisocyanate, toluene diisocyanate, bis cyclohexyl diisocyanate, tetramethylene xylene diisocyanate, ethyl ethylene diisocyanate, 2,3-dimethyl ethylene diisocyanate, 1-methyltrimethylene diisocyanate, 1,3-cyclopenthylene diisocyanate, 1,4-cyclohexylene diisocyanate, 1,3-phenylene diisocyanante, 1,5-naphthalene diisocyanate, bis-(4-isocyanatocyclohexyl)-methane, diisocyanatodiphenyl ether and the like. Typical trifunctional isocyanates that can be used are triphenylmethane triisocyanate, 1,3,5-benzene triisocyanate, 2,4,6-toluene triisocyanate and the like. Trimers of diisocyanates can also be used such as the trimer of hexamethylene diisocyanate which is sold under the tradename Desmodur® N-3390, as well as any of the other trimers listed above. Isocyanate functional adducts can be used that are formed from an organic polyisocyanate and a polyol. Any of the aforementioned polyisocyanates can be used with a polyol to form the adduct. Polyols such as trimethylol alkanes like trimethylol propane or ethane can be used. One useful adduct is the reaction product of tetramethylxylidene diisocyanate and trimethylol propane and is sold under the tradename of Cythane® 3160.

Blocked polyisocyanates can also be used. Typical blocking agents are those listed above such as alcohols, ketimines, oximes and the like.

The polyisocyanate crosslinking agent(s) described above can also be optionally combined with any of the conventional melamine curing agents for enhanced film integrity. Any of conventional monomeric or polymeric partially alkylated melamine formaldehyde melamine can be used, although monomeric alkoxy melamines are preferred. Typical alcohols that are used to alkylate these resins are methanol, ethanol, propanol, butanol, and the like. The details of such melamine resins suitable for use herein are described in Uhlianuk et al WO 00/55270 published Sep. 21, 2000, herein incorporated by reference. Preferred alkylated melamine crosslinking agents that are commercially available include Cymel® 373, Cymel® 385, and Cymel® 1168 resins.

In the coating composition of the present invention, the aforementioned isocyanate or isocyanate/melamine component, also referred to herein as the activator, is typically stored separately from the other binder components prior to application. This results in a two-pack coating composition which is generally preferred.

To improve weatherability of the clear composition about 0.1-10% by weight, based on the weight of the binder, of ultraviolet light stabilizers screeners, quenchers and antioxidants can be added. Typical ultraviolet light screeners and stabilizers include the following:

Benzophenones such as hydroxy dodecycloxy benzophenone, 2,4-dihydroxy benzophenone, hydroxy benzophenones containing sulfonic acid groups and the like.

Benzoates such as dibenzoate of diphenylol propane, tertiary butyl benzoate of diphenylol propane and the like.

Triazines such as 3,5-dialkyl-4-hydroxyphenyl derivatives of triazine, sulfur containing derivatives of dialkyl-4-hydroxy phenyl triazine, hydroxy phenyl-1,3,5-triazine and the like.

Triazoles such as 2-phenyl-4-(2,2'-dihydroxy benzoyl)-triazole, substituted benzotriazoles such as hydroxy-phenyltriazole and the like.

Hindered amines such as bis(1,2,2,6,6-pentamethyl-4-piperidinyl sebacate), di[4(2,2,6,6-tetramethyl piperidinyl)] sebacate and the like and any mixtures of any of the above.

The coating composition preferably contains sufficient amount of a catalyst or catalyst blend to cure the composition at ambient temperatures. Generally, about 0.01-2% by weight, based on the weight of the binder, of catalyst is used. Typically useful catalysts are tertiary amines such as triethylene diamine and alkyl tin esters such as dibutyl tin dilaurate, dibutyl tin diacetate, and the like. Typically, these are combined with acetic acid to improved the pot life of the composition.

Generally, flow control agents are used in the composition in amounts of about 0.1-5% by weight, based on the weight of the binder, such as polyacrylic acid, polyalkylacrylates, polyether modified dimethyl polysiloxane copolymer and polyester modified polydimethyl siloxane.

Conventional solvents and diluents are used to disperse and/or dilute the above mentioned polymers to obtain the present composition.

When used as a clear coating, it may be desirable to use pigments in the coating composition which have the same refractive index as the dried coating. Typically, useful pigments have a particle size of about 0.015-50 microns and are used in a pigment to binder weight ratio of about 1:100 to 10:100 and are inorganic siliceous pigments such as silica pigment having a refractive index of about 1.4-1.6.

In the application of the coating composition as a clear coating to a vehicle such as an automobile or a truck, the basecoat which may be either a solvent based composition or a waterborne composition is first applied and then dried to at least remove solvent or water before the clear coating is applied usually by conventional spraying. Electrostatic spraying may also be used. The dry film thickness of the clear coating is about 0.5-5 mils. The clear coating is dried at ambient temperatures generally in less than 5 minutes to a tack and dust free state. Moderately higher temperatures up to about 40°C also can be used. As soon as the clear coating is sufficiently cured to be dust free and tack free the vehicle can be moved from the work area to allow for the refinishing of another vehicle.

Generally, within about 3 to 6 hours after application, the clear coating is sufficiently cured to allow for buffing and polishing if needed to remove imperfections and improve gloss of the finish. The clear coating continues to cure and after 7-10 days reaches a relatively high level of hardness that is required for a durable and weatherable automotive finish.

The coating composition of this invention can also be pigmented and used as a basecoat in a clear coat/color coat finish or as a monocoat or even as an undercoat such as a primer or sealer. Typical pigments that are used in such a coating composition are metallic oxides such as titanium dioxide, iron oxides of various colors, zinc oxide, carbon black, filler pigments such as talc, china clay, barytes, carbonates, silicates and a wide variety of organic colored pigments such as quinacridones, copper phthalocyanines, perylenes, azo pigments, indanthrone blues, carbazoles such as carbazole violet, isoindolinones, isoindolones, thioindigo reds, benzimilazolinones, and metallic flake pigments such as aluminum flake, nickel flake or mica and the like. The pigments are usually introduced into the coating by first forming a mill base or pigment dispersion with a polymer dispersant by conventional techniques, such as high speed mixing, sand grinding, ball milling, attritor grinding or two roll milling, The mill base is then blended with the other constituents used in the coating composition.

Coating compositions of this invention have excellent adhesion to a variety of metallic or non-metallic substrates, such as previously painted substrates, cold rolled steel, phosphatized steel, and steel coated with conventional primers by electrodeposition. These coating composition can be used to coat plastic substrates such as polyester reinforced fiberglass, reaction injection-molded urethanes and partially crystalline polyamides.

Coating compositions of this invention can be applied by conventional techniques such as spraying, electrostatic spraying, dipping, brushing, flowcoating and the like. The preferred techniques are spraying and electrostatic spraying. In refinish applications, the composition is dried and cured at ambient temperatures but can be forced dried at elevated temperatures of 40-100°C for about 5-30 minutes. For O.E.M. (original equipment manufacture) applications, the composition is typically baked at 100-150°C for about 15-30 minutes to form a coating about 0.1-3.0 mils thick. When the composition is used as a clearcoat, it is applied over the color coat which may be dried to a tack-free state and cured or preferably flash dried for a short period before the clearcoat is applied. The color coat/clearcoat finish is then baked as mentioned above to provide a dried and cured finish. The present invention is also applicable to non-baking refinish systems, as will be readily appreciated by those skilled in the art.

It is customary to apply a clear topcoat over a basecoat by means of a "wet-on-wet" application, i.e., the topcoat is applied to the basecoat without curing or completely drying the basecoat. The coated substrate is then heated for a predetermined time period to allow simultaneous curing of the base and clear coats.

The present invention also provides water borne coating compositions formulated with the polyisocyanates of this invention. These compositions are particularly useful in formulating waterborne basecoats for clear coat/color coat finishes for automobiles and trucks. The water borne compositions generally comprise a film-forming binder and an aqueous carrier medium comprising at least 50% water. The film-forming binder contains the polyisocyanate curing agent and one or more water-dispersible binder polymers or oligomers containing functional groups that are reactive with isocyanates, such as hydroxy-acid acrylic polymers that have been neutralized with an inorganic base or amine. The aqueous carrier also typically contains minor amounts of a water-miscible solvent to help solubilize the binder components in the aqueous carrier medium. The coating also contains the usual other additives such as those listed above. Examples of polymers or oligomers and other additives useful in such water borne compositions are described in Antonelli et al U.S. Patent 6,107,392 issued Aug. 22, 2000 and Brunnemann et al. U.S. Patent 5,876,802, the disclosures of which are herein incorporated by reference. Waterborne latex coatings can also be made using crosslinked polymer microparticles, such as those described in Backhouse U.S. Patent 4,403,003 issued Sep. 6, 1983, herein incorporated by reference.

Moisture-cure coating compositions can also be formulated with the biuret group-containing polyisocyanate of the present invention. Such compositions typically comprise polyisocyanate alone and conventional moisture-cure catalyst. The details of moisture cure compositions can be found in Brizzolara U.S. Patent 4,211,804 issued Jul. 8, 1980, herein incorporated by reference.

Cathodic electrocoating compositions can also be formulated with the biuret group-containing polyisocyanates. Resin compositions used in electrocoating baths of a typical cathodic electrodeposition process also well known in the art. These resins typically are made from polyepoxide resins which have been chain extended and then an adduct is formed to include amine groups in the resin. Amine groups typically are introduced through reaction of the resin with an amine compound. These resins are blended with a crosslinking agent usually a blocked polyisocyanate and then neutralized with an acid to form a water emulsion which is usually referred to as a principal emulsion. The principal emulsion that is formed is then combined with pigment, coalescent solvents, water, and other additives to form the electrocoating bath. Electrodeposition of primers to automotive substrates is widely used in the automotive industry. Cathodic electrocoating compositions, resin compositions, coating baths and cathodic electrodeposition processes are disclosed in U.S. Patents 5,667,894 and 6,020,069, herein incorporated by reference.

The present invention also provides low VOC, essentially solventless, crosslinkable powder coating compositions containing the polyisocyanate of this invention. These powder coatings are particularly useful for automotive primer or clear coat applications. The powder coating generally comprises a particulate mixture of the novel polyisocyanate curing agent of this invention and a high Tg (glass transition temperature) polymer having functional groups that are reactive with the polyisocyanate curing agent, together with the usual other additives. Acrylic polyols and polyester polyols are generally preferred having a Tg above room temperature. The details of the polymers and other additives suitable for use in the powder coatings of the present invention are described in WO 00/12579, DE 1954424, WO 95/28450, US Patent 4,957,814, the disclosures of which are herein incorporated by reference.

The invention will be further described by reference to the following Examples. All parts and percentages are on a weight basis unless otherwise indicated. All molecular weights disclosed herein are determined by GPC (gel permeation chromatography) using a polystyrene standard.

## EXAMPLES

The following examples (Examples 1-3) show the preparation of biuret-containing polyisocyanates in accordance with the present invention using trifunctional isocyanates and water during processing.

## EXAMPLE 1

A biuret group-containing polyisocyanate having a functionality of 5 isocyanate groups per molecule was prepared by the following procedure:

To a 3-liter 3-necked flask equipped with a cold water condenser, thermocouple, heating mantle, mechanical stirrer and nitrogen inlet was added 1000 grams of hexamethylene diisocyanate (HDI) trimer (Desmodur® N-3390 by Bayer AG, Pittsburgh PA) and 428.6 grams of n-butyl acetate (nBA). The mixture was stirred at room temperature under a nitrogen blanket. 0.5 Grams of dibutyl phosphate was then added to the flask and the reaction mixture was heated to 120°C. Once the reaction mixture reached 120°C, 6.0 grams of distilled water was added over a period of 1 hour. After the addition of water was completed, the reaction mixture continued to be stirred at 120°C for an additional ½ hour. Thereafter, the temperature was increased to 140°C and the reaction mixture was maintained at 140°C for 4 to 5 hours. Following this, the reaction mixture was cooled to room temperature. After cooling, the resulting product had an NCO content of 12.3% and a viscosity of 347 cps (25°C) at 70% weight solids in nBA.

## EXAMPLE 2

A biuret group-containing polyisocyanate having a functionality of 6 isocyanate groups per molecule was prepared by the following procedure:

To a 3-liter 3-necked flask equipped as in Example 1 was added 1000 grams of HDI trimer (Desmodur® N-3390 by Bayer AG, Pittsburgh, PA) and 428.6 grams ofn-butyl acetate (nBA). The mixture was stirred at room temperature under a nitrogen blanket. 0.5 Grams of dibutyl phosphate was then added to the flask and the reaction mixture was heated to 120°C. Once the reaction mixture reached 120°C, 7.2 grams of distilled water was added over a period of 1 hour. After the addition of water was completed, the reaction mixture continued to be stirred at 120°C for an additional ½ hour. Thereafter, the temperature was increased to 140°C and the reaction mixture was maintained at 140°C for 6 hours. Following this, the reaction mixture was cooled to room temperature. After cooling, the resulting product had an NCO content of 11.8% and a viscosity of 713 cps (25°C) at 70% weight solids in nBA.

## EXAMPLE 3

A biuret group-containing polyisocyanate having a functionality of 7 isocyanate groups per molecule was prepared by the following procedure:

To a 3-liter 3-necked flask equipped as in Example 1 was added 1000 grams of HDI trimer (Desmodur® N-3390 by Bayer AG, Pittsburgh, PA) and 428.6 grams of n-butyl acetate (nBA). The mixture was stirred at room temperature under a nitrogen blanket. 0.5 Grams of dibutyl phosphate was then added to the flask and the reaction mixture was heated to 120°C. Once the reaction mixture reached 120°C, 8.25 grams of distilled water was added over a period of 1 hour. After the addition of water was completed, the reaction mixture. continued to be stirred at 120°C for an additional ½ hour. Thereafter, the temperature was increased to 140°C and the reaction mixture was maintained at 140°C for 7 to 8 hours. Following this, the reaction mixture was cooled to room temperature. After cooling, the resulting product had an NCO content of 11.3% and a viscosity of 1,948 cps (25°C) at 70% weight solids in nBA.

The following examples (Example 4 and Comparison Examples 5-7) demonstrate that a polyisocyanate produced according to the present invention has improved properties, when compared to polyisocyanates prepared by the prior art process using t-butanol as the biuretizing agent.

## EXAMPLE 4

A biuret group-containing polyisocyanate having a functionality of 5 isocyanate groups per molecule was prepared by the following procedure:

200 grams of N-3300 (0.34 mole), 51 grams of butyl acetate, 1.14 grams of water (0.06 mole), and 0.1 grams of dibutyl phosphate (0.0005 mole) were charged into a 500-ml, 3-neck flask equipped with a cold water condenser, thermocouple, heating mantle, and mechanical stirrer. The mixture was stirred at room temperature under nitrogen, then heated to 140°C over 2 hours and reacted at that temperature for 9.75 hours until the theoretical NCO content of 14.25% was obtained. After cooling to room temperature, the resulting product had an NCO content of 14.15%, a viscosity of 1,277cps (25°C, 100 shear rate), and a color of 45 APHA at 80% solids in n-butyl acetate.

## EXAMPLE 5 - Comparison

A biuret group-containing polyisocyanate having a functionality of 5 isocyanate groups per molecule was prepared by the following procedure:

200 grams of N-3300 (0.34 mole), 56 grams of butyl acetate, 4.69 grams of t-BuOH (0.06 mole), and 0.5 grams of dibutyl phosphate (0.0024 mole) were charged into a 500-ml, 3-neck flask equipped with a cold water condenser, thermocouple, heating mantle, and mechanical stirrer. The mixture was stirred at room temperature under nitrogen, then heated to 140°C over 2 hours and reacted between 150°C and 155°C for 10 hours until the theoretical NCO content of 14.25% was obtained. After cooling to room temperature, the resulting product had an NCO content of 14.22%, a viscosity of 1,188 cps (25°C, 100 shear rate), and a color of 245 APHA at 80% solids in nBA.

## EXAMPLE 6 - Comparison

A biuret group-containing polyisocyanate having a functionality of 5 isocyanate groups per molecule was prepared by the following procedure:

200 grams of N-3300 (0.34 mole), 54 grams of butyl acetate, 2.35 grams of t-BuOH (0.03 mole) mixed with 0.57 grams of water (0.03 mole), and 03 grams of dibutyl phosphate (0.0014 mole) were charged into a 500-ml, 3-neck flask equipped with a cold water condenser, thermocouple, heating mantle, and mechanical stirrer. The mixture was stirred at room temperature under nitrogen, then heated to 150°C over 3 hours and reacted between 140°C and 150°C for 6.25 hours until the theoretical NCO content of 14.25% was obtained. After cooling to room temperature, the resulting product had an NCO content of 14.04%, a viscosity of 1,301 cps (25°C, 100 shear rate), and a color of 8.1 APHA at 80% solids in nBA.

## EXAMPLE 7 - Comparison

A biuret group-containing polyisocyanate having a functionality of 5 isocyanate groups per molecule was prepared by the following procedure:

200 grams of N-3300 (0.34 mole), 52 grams of butyl acetate, 0.94 grams of *t*-BuOH (0.01 mole) mixed with 0.91 grams of water (0.05 mole), and 0.3 grams of dibutyl phosphate (0.0014 mole) were charged into a 500-ml, 3-neck flask equipped with a cold water condenser, thermocouple, heating mantle, and mechanical stirrer. The mixture was stirred at room temperature under nitrogen, then heated to 150°C over 3 hours and reacted at that temperature for 9.25 hours until the theoretical NCO content of 14.25% was obtained. After cooling to room temperature, the resulting product had an NCO content of 14.18%, a viscosity of 1,594 cps (25°C, 100 shear rate), and a color of 93 APHA at 80% solids in nBA.

Example 4 and Comparison Examples 5-7 demonstrate that the biuret group-containing polyisocyanates prepared according to the invention using water as the biuretizing agent possess improved color, i.e., are less yellow, than the comparison biuret group-containing polyisocyanates prepared using t-butanol or a mixture of t-butanol and water as the biuretizing agent as described in Canadian Application 2,211,025.

The following examples (Examples 8-9) show the preparation of hydroxy functional binder resins that are utilized in the coating compositions described below along with the above described biuret group-containing polyisocyanate curing agents.

## EXAMPLE 8

An acrylic polyol binder resin was prepared by the following procedure:

To a 2-liter flask fitted with an agitator, cold water condenser, thermocouple, nitrogen inlet, heating mantle, and addition pumps and ports was added 305.3 grams of xylene which is agitated and heated to reflux (137 to 142°C). A monomer mixture comprising 106.1 grams. styrene, 141.4 grams methyl methacrylate, 318.3 grams isobutyl methacrylate, 141.4 grams hydroxy ethyl methacrylate and 10.4 grams xylene was then added to the flask via the addition pumps and ports simultaneously with an initiator mixture comprising 17.0 grams t-butyl peracetate and 85.2 grams xylene. The monomer mixture was added over a period of 180 minutes and the addition time for the initiator mixture was also 180 minutes. The batch was held at reflux (137 to 142°C) throughout the polymerization process. An initiator mixture comprising 4.3 grams t-butyl peracetate and 57.8 grams methyl ethyl ketone was then immediately added to the reaction mixture over 60 minutes and the batch was subsequently held at reflux for 60 minutes. The batch was then cooled to below 90°C and 13.0 grams of methyl ethyl ketone was added. The resulting polymer solution has weight solids of 60% and Gardner Holdt viscosity of Z6. The number average molecular weight of the acrylic polymer was 5,000, weight average molecular weight was 11,000, as determined by gel permeation chromatography (polystyrene standard).

## EXAMPLE 9

A tetra hydroxy functional oligomer was prepared by the following procedure:

To a 12-liter flask fitted with an agitator, condense, heating mantle, nitrogen inlet, thermocouple and an addition port was added 2447.2 grams propylene glycol monomethylether acetate, 792.4 grams pentaerythritol and 1.36 grams triethyl amine. The reaction mixture was agitated and heated to 140°C under a nitrogen blanket at which time 3759 grams of methyl hexahydrophthalic anhydride was added over 6 hours. The reaction mixture was then held at 140°C until no anhydride bands were observed on an infrared spectroscopic trace. An acid oligomer was formed.

To a 5-liter flask fitted with an agitator, condense, heating mantle, nitrogen inlet, thermocouple and an addition port was added 2798.4 grams of acid oligomer prepared above and 2.76 grams triethyl amine. The mixture was agitated and heated to 60°C under nitrogen. 696.9 grams of 1,2-epoxy butane was then added over 120 minutes after which the temperature was raised to 105°C and held at that temperature until the acid number dropped to about 10 or less. The percent weight solids of the composition was 71.5, Gardner viscosity V, and the oligomer has a number average molecular weight 895 and weight average molecular weight 1022.

## PAINT EXAMPLES

The following examples (Examples 10-12) show the preparation of clear coat compositions prepared with the biuret-containing polyisocyanates described above, and a comparison example that compares the biuret samples to a standard commercial HDI trimer. The clear coat compositions were tested for automotive refinish clear coat applications. The following test methods were used:

Film Hardness

The micro-hardness of the coatings was measured using a Fischerscope hardness tester (model HM100V). The tester was set for maximum force of 100 mN ramped in series of 50, 1 second steps. The hardness was recorded in $N/mm^2$.
The film hardness is an indication of when the coating film is ready to be buffed.

Swell Ratio

The swell ratio of the free films (removed from TPO) was determined by swelling in methylene chloride. The free film was placed between two layers of aluminum foil and using a LADD punch, a disc of about 3.5 mm diameter was punched out of the film. The aluminum foil was removed from either side of the free film. Using a microscope with 10x magnification and a filar lens the unswollen diameter ($D_o$) of the film measured. Four drops of methylene chloride were added to the film, the film was allowed to swell for a few seconds and then a glass slide was placed over it. The swell ratio was then calculated as:

$$\text{Swell ratio} = (D_s)^2/(D_o)^2$$

The swell ratio is a measure of the crosslink density of the film and the early cure properties.

Dry Time

The dry time of a coated layer of composition was measured as BK3 surface dry time and BK4 through dry time using a BK dry time tester.
The surface dry time is a measure of physical dry or dry-to-touch (which allows for minimizing dirt pick up and rapid application of subsequent coating layers) and the through dry time is a measure of through dry or chemical dry (which allows for early buffing of a vehicle and the removal of the vehicle from the spray booth to outside storage). In automotive refinishing, a coating which has both early physical dry and chemical dry has the ability to greatly improve the productivity of a refinish shop. To get these properties and also meet today's low VOC requirements (< 4.4 lbs/gal VOC) is truly an outstanding accomplishment.

Gel Fraction

The gel fraction of free films (removed from TPO) was determined in boiling acetone. Approximately 0.5 grams of film (carefully weighed) was placed in a wire mesh screen. The film in the screen was boiled in acetone for 6 hours, allowed to cool. The screen were removed from the acetone, dried overnight, then reweighed. The reading was reported as:

Percent gel fraction = (wt. of film after boiling/ wt. of film before boiling) x 100.

Thus, a percent gel fraction reading of 100 indicates complete crosslinking, i.e., none of the test film dissolved in acetone and a reading of 0 indicates that no crosslinking took place, i.e., all of the test film dissolved in acetone.

Water Spot

Water spot rating is a measure of how well the film is crosslinked early in the cure. If water spot damage is formed on the film, this is an indication that the cure is not complete and further curing is needed before the film can be wet sanded or buffed or moved from the spray booth to outside storage. The water spot rating is determined in the following manner.

Freshly coated, sprayed or draw down, panels were laid on a flat surface, painted surface up. Deionized water was then applied with a pipette at 1 hour timed intervals. A drop of approximately ½ inch in diameter was placed on the panel and allowed to evaporate. The location of the droplet was identified to later rate the results. After evaporation, the panel was checked for deformation and discoloration of the spotted areas. The panel was wiped lightly with a piece of cheesecloth wetted with deionized water, which was followed by lightly wiping the panel dry with a piece of dry cheesecloth. The degree of deformation and discoloration was then rated on a visual scale of 1 to 10 scale, with 10 being the best, i.e., no evidence of spotting or distortion or discoloration, 9 being barely detectable, 8 slight ring, 7 very slight discoloration or slight distortion, 6 slight loss of gloss or slight discoloration, 5 definite loss of gloss or discoloration, 4 slight etching or definite distortion, 3 slight lifting, bad etching or discoloration, 2 definite lifting, and 1 being the worst, i.e., dissolving of film.

## EXAMPLE 10

This example compares the three biuret samples to a clear coat system with a standard commercial HDI trimer.

Clear coat compositions were prepared from the following constituents:

| | A | B | C | D |
|---|---|---|---|---|
| Part I | | | | |
| Hydroxy Func Oligomer (prepared in Example 9) | 63.21 | 46.39 | 45.25 | 44.06 |
| Tinuvin® 292 (Light stabilizer from Ciba-Geigy) | 1.41 | 1.41 | 1.41 | 1.41 |
| 25% Tinuvin® 328 (UV screener from Ciba-Geigy) in toluene/methyl ethyl ketone | 5.51 | 5.51 | 5.51 | 5.51 |
| Butyl acetate | 16.37 | 17.41 | 21.42 | 16.45 |
| 2% Dibutyltin dilaurate in ethyl acetate | 1.90 | 1.90 | 1.90 | 1.90 |
| 50% BYK® 306 (Silicon (flow control additive from BYK Chemie) in xylene | 2.42 | 2.42 | 2.42 | 2.42 |
| Acetic acid | 0.38 | 0.38 | 0.38 | 0.38 |
| Xylene | 16.37 | 12.62 | 8.45 | 13.95 |
| Total Part I | 107.57 | 88.04 | 86.74 | 86.07 |
| | | | | |
| Part II | | | | |
| Desmodur® N 3300 (HDI trimer from Bayer AG) | 43.7 | | | |
| 5 Func biuret (prepared in Example 1) | | 81.96 | | |
| 6 Funct biuret (prepared in Example 2) | | | 83.26 | |
| 7 Func biuret (prepared in Example 3) | | | | 83.93 |
| Butyl acetate | 18.73 | | | |
| Total Part II | 62.43 | 81.96 | 83.26 | 83.93 |

The constituents of Parts I and II were blended to a clear coat composition that was 60% solids with NCO /OH of 1.47. The coatings were with a 10 mil drawdown blade on glass, TPO (thermal polyolefin and Uniprime (ED5000) to give films 2.5 - 3 mils. The films were dried at room temperature, and other films were dried at 140F for 30 minutes and then stored at room temperature.

The experimental samples had faster dry times, quicker water spot free times, and formed harder films faster than the control using standard HDI isocyanurate trimer (Desmodur N 3300). The details are shown below.

Paint Results

The following is a comparison of the important properties of the compositions:

| Properties | A | B | C | D |
|---|---|---|---|---|
| BK3 DRY TIME | 125 | 47 | 52 | 47 |
| H20 SPOT 1 HR | 7 | 9 | 9 | 9 |
| H2O SPOT 2 HRS | 9 | 10 | 10 | 10 |
| H20 SPOT 3 HRS | 10 | 10 | 10 | 10 |

(continued)

| Properties | A | B | C | D |
|---|---|---|---|---|
| SWELL RATIO 1 DAY | 1.69 | 1.59 | 1.65 | 1.56 |
| SWELL RATIO 7 DAY | 1.60 | 1.59 | 1.49 | 1.60 |
| MICRO-HARDNESS 1 DAY | 10 | 10 | 11 | 10 |
| MICRO-HARDNESS 7 DAY | 24 | 48 | 53 | 54 |
| Swell ratio 140F at cool down | 2.1 | 2.02 | 1.96 | 1.53 |
| Swell ratio 140F 1 day | 1.77 | 1.70 | 1.67 | 1.50 |
| Micro-hardness 140F 1 day | 20 | 22 | 19 | 23 |
| Micro-hardness 140F 7 days | 57 | 98 | 85 | 95 |
| Micro-hardness 285fx 30 min | 146 | 142 | 142 | 144 |

## EXAMPLE 11

Three experimental biuret samples are compared to standard commercial HDI trimer clear coat system.

Clear coat compositions were prepared from the following constituents:

| | A | B | C | D |
|---|---|---|---|---|
| Part I | | | | |
| Hydroxy Func Acrylic (prepared in Example 8) | 88.86 | 75.07 | 74.02 | 72.86 |
| Tinuvin® 292 (described above) | 1.03 | 1.03 | 1.03 | 1.03 |
| 25% Tinuvin® 328 in toluene/methyl ethyl ketone (described above) | 4.03 | 4.03 | 4.03 | 4.03 |
| 2% Dibutyltin dilaurate in ethyl acetate | 1.39 | 1.39 | 1.39 | 1.39 |
| Butyl acetate | 24.8 | 29.62 | 36.36 | 28.59 |
| 50% BYK® 306 in xylene (described above) | 1.77 | 1.77 | 1.77 | 1.77 |
| Acetic acid | .28 | .28 | .28 | .28 |
| Xylene | 24.8 | 21.99 | 15.36 | 23.59 |
| Total Part I | 146.95 | 135.17 | 134.23 | 133.54 |
| Part II | | | | |
| Desmodur® N 3300 (described above) | 16.14 | | | |
| 5 func biuret (described above) | | 34.83 | | |
| 6 funct biuret (described above) | | | 35.77 | |
| 7 func biuret (described above) | | | | 36.46 |
| Butyl acetate | 6.92 | | | |
| Total Part II | 23.06 | 34.83 | 35.77 | 36.46 |

The constituents of Parts I and II were blended to a clear coat composition that was 43% solids with NCO/OH of 1.47. The coatings were with a 10 mil drawdown blade on glass, TPO (thermal polyolefin and Uniprime (ED5000) to give films 2 - 2.5 mils. The films were dried at room temperature, and other films were dried at 140F for 30 minutes and then stored at room temperature.

The experimental samples had quicker water spot free times, and lower swell ratios than the control using standard HDI isocyanurate trimer (Desmodur N 3300). All other properties were about the same. The details are shown below.

Paint Results

The following is a comparison of the important properties of the compositions:

| Properties | A | B | C | D |
|---|---|---|---|---|
| BK3 DRY TIME | 64 | 66 | 66 | 57 |

(continued)

| Properties | A | B | C | D |
|---|---|---|---|---|
| H20 SPOT 1 HR | 8 | 8 | 8 | 8 |
| H2O SPOT 2 HRS | 9 | 10 | 10 | 10 |
| H20 SPOT 3 HRS | 10 | 10 | 10 | 10 |
| SWELL RATIO 1 DAY | 1.84 | 1.64 | 1.66 | 1.74 |
| SWELL RATIO 7 DAY | 1.68 | 1.56 | 1.56 | 1.61 |
| MICRO-HARDNESS 1 DAY | 42 | 46 | 43 | 40 |
| MICRO-HARDNESS 7 DAY | 94 | 104 | 99 | 88 |
| Swell ratio 140F at cool down | 2.04 | 2.02 | 1.98 | 2.00 |
| Swell ratio 140F 1 day | 1.86 | 1.74 | 1.79 | 1.78 |
| Micro-hardness 140F 1 day | 65 | 59 | 55 | 50 |
| Micro-hardness 140F 7 days | 104 | 109 | 105 | 97 |
| Micro-hardness 285F x 30 min | 156 | 145 | 137 | 132 |

## EXAMPLE 12

Two biuret samples are compared to another standard commercial HDI trimer clear coat system.

Clear coat compositions were prepared from the following constituents:

| | A | B | C |
|---|---|---|---|
| Part I | | | |
| Hydroxy Func Acrylic (described above) | 70.73 | 66.15 | 65.31 |
| Hydroxy Func Oligomer (described above) | 9.41 | 8.80 | 8.69 |
| Tinuvin® 292 (described above) | 1.03 | 1.03 | 1.03 |
| 25% Tinuvin® 328 in toluene/methyl ethyl ketone (described above) | 4.03 | 4.03 | 4.03 |
| Butyl acetate | 62.01 | 56.41 | 58.32 |
| 2% Dibutyltin dilaurate in ethyl acetate | 1.39 | 1.39 | 1.39 |
| 50% BYK® 306 in xylene (described above) | 1.77 | 1.77 | 1.77 |
| Acetic acid | 0.28 | 0.28 | 0.28 |
| Total Part I | 150.64 | 139.86 | 140.81 |
| Part II | | | |
| Desmodur® N 3300 (described above) | 19.36 | | |
| 5 func biuret (described above) | | 30.14 | |
| 6 funct biuret (described above) | | | 29.19 |

The constituents of Parts I and II were blended to a clear coat composition that was 40% solids with NCO /OH of 1.03. The coatings were with a 10 mil drawdown blade on glass, TPO (thermal polyolefin and Uniprime (ED5000) to give films 2 - 2.5 mils. The films were dried at room temperature, and other films were dried at 140F for 30 minutes and then stored at room temperature.

The experimental samples had faster dry times, lower early swell ratio, and formed harder films faster than the control using standard HDI isocyanurate trimer (Desmodur N 3300). The details are shown below.

Paint Results

The following is a comparison of the important properties of the compositions:

| Properties | A | B | C |
|---|---|---|---|
| BK3 DRY TIME | 71 | 57 | 61 |
| H20 SPOT 1 HR | 8 | 8 | 8 |

(continued)

| Properties | A | B | C |
|---|---|---|---|
| H2O SPOT 2 HRS | 9 | 9 | 9 |
| H20 SPOT 3 HRS | 10 | 10 | 10 |
| SWELL RATIO 6 HOURS | 2.10 | 1.83 | 1.87 |
| SWELL RATIO 1 DAY | 1.73 | 1.68 | 1.71 |
| SWELL RATIO 7 DAY | 1.60 | 1.58 | 1.60 |
| MICRO-HARDNESS 1 DAY | 32 | 32 | 25 |
| MICRO-HARDNESS 7 DAY | 84 | 78 | 77 |
| Swell ratio 140F at cool down | 2.0 | 1.97 | 1.92 |
| Swell ratio 140F 1 day | 1.79 | 1.72 | 1.69 |
| Micro-hardness 140F 1 day | 17 | 20 | 20 |
| Micro-hardness 140F 7 days | 100 | 108 | 110 |
| Micro-hardness 285fx 30 min | 158 | 156 | 155 |

## Claims

1. A process for preparing a biuret group-containing polyisocyanate having a functionality of at least 4 which comprises reacting a polyisocyanate adduct which

   a) is prepared from an aliphatic, cycloaliphatic, or aromatic diisocyanate;
   b) has an average isocyanate functionality of at least 2.8; and
   c) contains either isocyanurate or iminooxadiazine dione groups, provided that a total of at least 50 mole percent, based on the total moles of isocyanate adduct groups present in the polyisocyanate adduct, of isocyanurate and iminooxadiazine dione groups are present,

   with 0.01 to 0.15 moles of water for each equivalent of isocyanate groups in the polyisocyanate adducts at a temperature of 50 to 180°C to incorporate biuret groups into the polyisocyanate adduct.

2. The process of Claim 1 wherein a) is an aliphatic diisocyanate.

3. The process of Claim 2 wherein a) is 1,6-hexamethylene diisocyanate.

4. The process of Claim 2, wherein a) is isophorone diisocyanate.

5. The process of Claim 2, wherein a) is a mixture of 1,6-hexamethylene diisocyanate and isophorone diisocyanate.

6. The process of Claim 1, wherein iminooxadiazine dione groups are present in admixture with the isocyanurate groups in an amount of at least 10 mole percent, based on the total moles of iminooxadiazine dione and isocyanurate groups.

7. The process of Claim 1 wherein the biuret group-containing polyisocyanate so prepared has an average isocyanate functionality in the range of 4-10.

8. The process of Claim 1 wherein the biuret group-containing polyisocyanate so prepared has a number average molecular weight between about 500 and 3,000.

9. A biuret group-containing polyisocyanate composition having a functionality of at least 4 which is prepared by a process comprising reacting a polyisocyanate adduct which

   a) is prepared from an aliphatic, cycloaliphatic, or aromatic diisocyanate;
   b) has an average isocyanate functionality of at least 2.8; and
   c) contains either isocyanurate or iminooxadiazine dione groups, provided that a total of at least 50 mole percent, based on the total moles of isocyanate adduct groups present in the polyisocyanate adduct, of isocyanurate and iminooxadiazine dione groups are present,

with 0.01 to 0.15 moles of water for each equivalent of isocyanate groups in the polyisocyanate adducts at a temperature of 50 to 180°C to incorporate biuret groups into the polyisocyanate adduct.

10. The composition of Claim 9 wherein a) is an aliphatic diisocyanate.

11. The composition of Claim 10 wherein a) is 1,6-hexamethylene diisocyanate.

12. The composition of Claim 10 wherein a) is isophorone diisocyanate.

13. The composition of Claim 10 wherein a) is a mixture of is 1,6-hexamethylene diisocyanate and isophorone diisocyanate.

14. The composition of Claim 9 wherein iminooxadiazine dione groups are present in admixture with the isocyanurate groups in an amount of at least 10 mole percent, based on the total moles of iminooxadiazine dione and isocyanurate groups.

15. The composition of Claim 9 wherein the biuret group-containing polyisocyanate has an average isocyanate functionality in the range of 4-10.

16. The composition of Claim 9 wherein the biuret group-containing polyisocyanate has a number average molecular weight of 500 to 3000.

17. A crosslinkable coating composition containing a film-forming binder and an optional liquid carrier, wherein the binder contains

   a) an oligomer or polymer or dispersed gelled polymer having functional groups capable of reacting with isocyanate groups on component (b); and
   b) a blocked or unblocked biuret group-containing polyisocyanate curing agent having a functionality of at least 4 and a number average molecular weight of about 500 to 3,000 prepared by reacting a polyisocyanate adduct which

      i) is prepared from an aliphatic, cycloaliphatic, or aromatic diisocyanate;
      ii) has an average isocyanate functionality of at least 2.8; and
      iii) contains either isocyanurate or iminooxadiazine dione groups, provided that a total of at least 50 mole percent, based on the total moles of isocyanate adduct groups present in the polyisocyanate adduct, of isocyanurate and iminooxadiazine dione groups are present,

   with 0.01 to 0.15 moles of water for each equivalent of isocyanate groups in the polyisocyanate adducts at a temperature of 50 to 180°C to incorporate biuret groups into the polyisocyanate adduct.

18. The coating composition of Claim 17 wherein i) is an aliphatic diisocyanate.

19. The coating composition of Claim 18 wherein i) is 1,6-hexamethylene diisocyanate.

20. The coating composition of Claim 18 wherein i) is isophorone diisocyanate.

21. The coating composition of Claim 18 wherein a) is a mixture of 1,6-hexamethylene diisocyanate and isophorone diisocyanate.

22. The coating composition of Claim 17 wherein iminooxadiazine dione groups are present in admixture with the isocyanurate groups in an amount of at least 10 mole percent, based on the total moles of iminooxadiazine dione and isocyanurate groups.

23. The coating composition of Claim 17 wherein the biuret group-containing polyisocyanate has an average isocyanate functionality in the range of 4-10.

**24.** The coating composition of Claim 17 wherein the biuret group-containing polyisocyanate has a number average molecular weight of 500 to 3000.

**25.** The coating composition of Claim 17 wherein the coating is a liquid solvent borne coating.

**26.** The coating composition of Claim 17 wherein the coating is a liquid water borne coating.

**27.** The coating composition of Claim 17 wherein the coating is a powder coating.

**28.** The coating composition of Claim 17 wherein said composition is suitable for the production of the base coat or the clear coat or undercoat in a clear coat/color coat finish for automobiles and trucks.

**29.** A substrate coated with a dried cured layer of the coating composition of Claim 17.

**30.** An automotive substrate coated with a dried cured multi-layer coating, wherein at least one of the dried cured coating layers is the coating composition of Claim 17.

**Patentansprüche**

**1.** Verfahren zum Herstellen eines Biuret-Gruppe enthaltenden Polyisocyanats mit einer Funktionalität von mindestens 4, welches Verfahren das Umsetzen eines Polyisocyanat-Adduktes umfasst, das

a) hergestellt ist aus einem aliphatischen, cycloaliphatischen oder aromatischen Diisocyanat;

b) eine mittlere Isocyanat-Funktionalität von mindestens 2,8 hat und

c) entweder Isocyanurat- oder Iminooxadiazindion-Gruppen unter der Voraussetzung enthält, dass mindestens 50 Mol.% bezogen auf die Gesamtmolzahl der in dem Polyisocyanat-Addukt vorhandenen Isocyanat-Adduktgruppen an Isocyanurat- und Iminooxadiazindion-Gruppen vorhanden sind,

und zwar mit 0,01 bis 0,15 Mol Wasser für jedes Äquivalent an Isocyanat-Gruppen in den Polyisocyanat-Addukten bei einer Temperatur von 50° bis 180°C, um Biuret-Gruppen in das Polyisocyanat-Addukt einzubauen.

**2.** Verfahren nach Anspruch 1, bei welchem a) ein aliphatisches Diisocyanat ist.

**3.** Verfahren nach Anspruch 2, bei welchem a) 1,6-Hexamethylendiisocyanat ist.

**4.** Verfahren nach Anspruch 2, bei welchem a) Isophorondiisocyanat ist.

**5.** Verfahren nach Anspruch 2, bei welchem a) eine Mischung von 1,6-Hexamethylendiisocyanat und Isophorondiisocyanat ist.

**6.** Verfahren nach Anspruch 1, bei welchem Iminooxadiazindion-Gruppen in der Zumischung mit den Isocyanurat-Gruppen in einer Menge von mindestens 10 Mol.% bezogen auf die Gesamtmolzahl von Iminooxadiazindion- und Isocyanurat-Gruppen vorhanden sind.

**7.** Verfahren nach Anspruch 1, bei welchem das so hergestellte Biuret-Gruppe enthaltende Polyisocyanat eine mittlere Isocyanat-Funktionalität im Bereich von 4 bis 10 hat.

**8.** Verfahren nach Anspruch 1, bei welchem das so hergestellte Biuret-Gruppe enthaltende Polyisocyanat eine zahlengemittelte relative Molekülmasse zwischen etwa 500 und 3.000 hat.

**9.** Biuret-Gruppe enthaltende Polyisocyanat-Zusammensetzung mit einer Funktionalität von mindestens 4, die mit Hilfe eines Verfahrens hergestellt wird, welches das Umsetzen eines Polyisocyanat-Adduktes umfasst, das

a) hergestellt ist aus einem aliphatischen, cycloaliphatischen oder aromatischen Diisocyanat;
b) eine mittlere Isocyanat-Funktionalität von mindestens 2,8 hat und

c) entweder Isocyanurat- oder Iminooxadiazindion-Gruppen unter der Voraussetzung enthält, dass insgesamt mindestens 50 Mol.% bezogen auf die Gesamtmolzahl der in dem Polyisocyanat-Addukt vorhandenen Isocyanat-Adduktgruppen an Isocyanurat- und Iminooxadiazindion-Gruppen vorhanden sind,
und zwar mit 0,01 bis 0,15 Mol Wasser für jedes Äquivalent von Isocyanat-Gruppen in den Polyisocyanat-Addukten bei einer Temperatur von 50° bis 180°C, um Biuret-Gruppen in das Polyisocyanat-Addukt einzubauen.

10. Zusammensetzung nach Anspruch 9, worin a) ein aliphatisches Diisocyanat ist.

11. Zusammensetzung nach Anspruch 10, worin a) 1,6-Hexamethylendiisocyanat ist.

12. Zusammensetzung nach Anspruch 10, worin a) Isophorondiisocyanat ist.

13. Zusammensetzung nach Anspruch 10, worin a) eine Mischung von 1,6-Hexamethylendiisocyanat und Isophorondiisocyanat ist.

14. Zusammensetzung nach Anspruch 9, worin Iminooxadiazindion-Gruppen in Zumischung mit den Isocyanurat-Gruppen in einer Menge von mindestens 10 Mol.% bezogen auf die Gesamtmolzahl von Iminooxadiazindion- und Isocyanurat-Gruppen vorhanden sind.

15. Zusammensetzung nach Anspruch 9, worin das Biuret-Gruppe enthaltende Polyisocyanat eine mittlere Isocyanat-Funktionalität im Bereich von 4 bis 10 hat.

16. Zusammensetzung nach Anspruch 9, worin das Biuret-Gruppe enthaltende Polyisocyanat eine zahlengemittelte relative Molekülmasse von 500 bis 3.000 hat.

17. Vernetzbare Beschichtungszusammensetzung, enthaltend ein filmbildendes Bindemittel und einen optionalen flüssigen Träger, worin das Bindemittel enthält:

a) ein Oligomer oder Polymer oder dispergiertes, erstarrtes Polymer mit funktionellen Gruppen, die zur Reaktion mit Isocyanat-Gruppen an Komponente (b) in der Lage sind, und
b) ein geblocktes oder ungeblocktes, Biuret-Gruppe enthaltendes Polyisocyanat als Vernetzungsmittel mit einer Funktionalität von mindestens 4 und einer zahlengemittelten relativen Molekülmasse von etwa 500 bis 3.000, hergestellt durch Umsetzen eines Polyisocyanat-Adduktes, das

i) hergestellt ist aus aliphatischem, cycloaliphatischem oder aromatischem Diisocyanat;
ii) eine mittlere Isocyanat-Funktionalität von mindestens 2,8 hat und
iii) entweder Isocyanurat- oder Iminooxadiazindion-Gruppen enthält unter der Voraussetzung, dass insgesamt mindestens 50 Mol.% bezogen auf die Gesamtmolzahl der in dem Polyisocyanat-Addukt vorhandenen Isocyanat-Adduktgruppen an Isocyanurat- und Iminooxadiazindion-Gruppen vorhanden sind,

und zwar mit 0,01 bis 0,15 Mol Wasser für jedes Äquivalent von Isocyanat-Gruppen in den Polyisocyanat-Addukten bei einer Temperatur von 50° bis 180°C, um Biuret-Gruppen in das Polyisocyanat-Addukt einzubauen.

18. Beschichtungszusammensetzung nach Anspruch 17, worin i) ein aliphatisches Diisocyanat ist.

19. Beschichtungszusammensetzung nach Anspruch 18, worin i) 1,6-Hexamethylendiisocyanat ist.

20. Beschichtungszusammensetzung nach Anspruch 18, worin i) Isophorondiisocyanat ist.

21. Beschichtungszusammensetzung nach Anspruch 18, worin a) eine Mischung von 1,6-Hexamethylendiisocyanat und Isophorondiisocyanat ist.

22. Beschichtungszusammensetzung nach Anspruch 17, worin Iminooxadiazindion-Gruppen in Zumischung mit den Isocyanat-Gruppen in einer Menge von mindestens 10 Mol.% bezogen auf die Gesamtmolzahl von Iminooxadiazindion- und Isocyanurat-Gruppen vorhanden sind.

23. Beschichtungszusammensetzung nach Anspruch 17, worin das Biuret-Gruppe enthaltende Polyisocyanat eine mittlere Isocyanat-Funktionalität im Bereich von 4 bis 10 hat.

24. Beschichtungszusammensetzung nach Anspruch 17, worin das Biuret-Gruppe enthaltende Polyisocyanat eine zahlengemittelte relative Molekülmasse von 500 bis 3.000 hat.

25. Beschichtungszusammensetzung nach Anspruch 17, worin die Beschichtung eine flüssige Beschichtung auf Lösemittelbasis ist.

26. Beschichtungszusammensetzung nach Anspruch 17, worin die Beschichtung eine flüssige Beschichtung auf wässriger Basis ist.

27. Beschichtungszusammensetzung nach Anspruch 17, worin die Beschichtung ein Pulverlack ist.

28. Beschichtungszusammensetzung nach Anspruch 17, worin die Beschichtungszusammensetzung für die Herstellung des Grundlackes oder Klarlackes oder Grundierung in einem Klarlack/Farblack-Decklack für Automobile und Lastkraftwagen ist.

29. Substrat, beschichtet mit einer getrockneten, gehärteten Lage der Beschichtungszusammensetzung nach Anspruch 17.

30. Kraftfahrzeug-Substrat, beschichtet mit einer getrockneten, gehärteten, mehrlagigen Beschichtung, worin mindestens eine der getrockneten, gehärteten Lagen der Beschichtung die Beschichtungszusammensetzung nach Anspruch 17 ist.

## Revendications

1. Procédé de préparation d'un polyisocyanate contenant un (des) groupement(s) biuret ayant une fonctionnalité d'au moins 4 qui comprend la réaction d'un adduit d'isocyanate qui

a) est préparé à partir d'un diisocyanate aliphatique, cycloaliphatique, ou aromatique ;
b) a une fonctionnalité en isocyanate moyenne d'au moins 2,8 ; et
c) contient des groupements soit isocyanurate soit iminooxadiazinedione, pour autant qu'un total d'au moins 50 pourcent en moles, sur base du nombre total de moles de groupements d'adduit d'isocyanate présents dans l'adduit de polyisocyanate, de groupements isocyanurate et iminooxadiazinedione soient présents,

avec 0,01 à 0,15 mole d'eau pour chaque équivalent de groupements isocyanate dans les adduits de polyisocyanate à une température de 50 à 180°C pour incorporer des groupements biuret dans l'adduit de polyisocyanate.

2. Procédé selon la revendication 1 **caractérisé en ce que** a) est un diisocyanate aliphatique.

3. Procédé selon la revendication 2 **caractérisé en ce que** a) est du diisocyanate de 1,6-hexaméthylène.

4. Procédé selon la revendication 2, **caractérisé en ce que** a) est du diisocyanate d'isophorone.

5. Procédé selon la revendication 2, **caractérisé en ce que** a) est un mélange de diisocyanate de 1,6-hexaméthylène et de diisocyanate d'isophorone.

6. Procédé selon la revendication 1, **caractérisé en ce que** les groupements iminooxadiazinedione sont présents en mélange avec les groupements isocyanurate en une quantité d'au moins 10 pourcent en moles, sur base du nombre total de moles de groupements iminooxadiazinedione et isocyanurate.

7. Procédé selon la revendication 1 **caractérisé en ce que** le polyisocyanate contenant le (les) groupement(s) biuret ainsi préparé a une fonctionnalité en isocyanate moyenne se situant dans la plage allant de 4 à 10.

8. Procédé selon la revendication 1 **caractérisé en ce que** le polyisocyanate contenant le (les) groupement(s) biuret ainsi préparé a un poids moléculaire moyen en nombre situé entre environ 500 et 3 000.

9. Composition de polyisocyanate contenant un (des) groupement(s) biuret ayant une fonctionnalité d'au moins 4 qui est préparée par un procédé comprenant la réaction d'un adduit de polyisocyanate qui

a) est préparé à partir d'un diisocyanate aliphatique, cycloaliphatique, ou aromatique ;
b) a une fonctionnalité en isocyanate moyenne d'au moins 2,8 ; et
c) contient des groupements soit isocyanurate soit iminooxadiazinedione, pour autant qu'un total d'au moins 50 pourcent en moles, sur base du nombre total de moles de groupements d'adduit d'isocyanate présents dans l'adduit de polyisocyanate, de groupements isocyanurate et iminooxadiazinedione soient présents,

avec 0,01 à 0,15 mole d'eau pour chaque équivalent de groupements isocyanate dans les adduits de polyisocyanate à une température de 50 à 180°C pour incorporer des groupements biuret dans l'adduit de polyisocyanate.

10. Composition selon la revendication 9 **caractérisée en ce que** a) est un diisocyanate aliphatique.

11. Composition selon la revendication 10 **caractérisée en ce que** a) est du diisocyanate de 1,6-hexaméthylène.

12. Composition selon la revendication 10 **caractérisée en ce que** a) est du diisocyanate d'isophorone.

13. Composition selon la revendication 10 **caractérisée en ce que** a) est un mélange de diisocyanate de 1,6-hexaméthylène et de diisocyanate d'isophorone.

14. Composition selon la revendication 9 **caractérisée en ce que** les groupements iminooxadiazinedione sont présents en mélange avec les groupements isocyanurate en une quantité d'au moins 10 pourcent en moles, sur base du nombre total de moles de groupements iminooxadiazinedione et isocyanurate.

15. Composition selon la revendication 9 **caractérisée en ce que** le polyisocyanate contenant le(s) groupement(s) biuret a une fonctionnalité en isocyanate moyenne se situant dans la plage allant de 4 à 10.

16. Composition selon la revendication 9 **caractérisée en ce que** le polyisocyanate contenant le(s) groupement(s) biuret a un poids moléculaire moyen en nombre de 500 et 3 000.

17. Composition de revêtement réticulable contenant un liant filmogène et un vecteur liquide optionnel,
**caractérisée en ce que** le liant contient

a) un oligomère ou polymère ou polymère en gel dispersé ayant des groupements fonctionnels capables de réagir avec des groupements isocyanates d'un composant b) ; et
b) un agent durcisseur à base de polyisocyanate contenant un (des) groupement(s) biuret bloqué ou non bloqué ayant une fonctionnalité d'au moins 4 et un poids moléculaire moyen en nombre d'environ 500 à 3 000 préparé par réaction d'un adduit de polyisocyanate qui

i) est préparé à partir d'un diisocyanate aliphatique, cycloaliphatique, ou aromatique ;
ii) a une fonctionnalité en isocyanate moyenne d'au moins 2,8 ; et
iii) contient des groupements soit isocyanurate soit iminooxadiazinedione, pour autant qu'un total d'au moins 50 pourcent en moles, sur base du nombre total de moles de groupements d'adduit d'isocyanate présents dans l'adduit de polyisocyanate, de groupements isocyanurate et iminooxadiazinedione soient présents,

avec 0,01 à 0,15 mole d'eau pour chaque équivalent de groupements isocyanate dans les adduits de polyisocyanate à une température de 50 à 180°C pour incorporer des groupements biuret dans l'adduit de polyisocyanate.

18. Composition de revêtement selon la revendication 17 **caractérisée en ce que** i) est un diisocyanate aliphatique.

19. Composition de revêtement selon la revendication 18 **caractérisée en ce que** i) est du diisocyanate de 1,6-hexaméthylène.

20. Composition de revêtement selon la revendication 18 **caractérisée en ce que** i) est du diisocyanate d'isophorone.

21. Composition de revêtement selon la revendication 18 **caractérisée en ce que** i) est un mélange de diisocyanate de 1,6-hexaméthylène et de diisocyanate d'isophorone.

**22.** Composition de revêtement selon la revendication 17 **caractérisée en ce que** les groupements iminooxadiazinedione sont présents en mélange avec les groupements isocyanurate en une quantité d'au moins 10 pourcent en moles, sur base du nombre total de moles de groupements iminooxadiazinedione et isocyanurate.

**23.** Composition de revêtement selon la revendication 17 **caractérisée en ce que** le polyisocyanate contenant le(s) groupement(s) biuret a une fonctionnalité en isocyanate moyenne se situant dans la plage allant de 4 à 10.

**24.** Composition de revêtement selon la revendication 17 **caractérisée en ce que** le polyisocyanate contenant le(s) groupement(s) biuret a un poids moléculaire moyen en nombre de 500 à 3 000.

**25.** Composition de revêtement selon la revendication 17 **caractérisée en ce que** le revêtement est un revêtement liquide solvanté.

**26.** Composition de revêtement selon la revendication 17 **caractérisée en ce que** le revêtement est un revêtement liquide aqueux.

**27.** Composition de revêtement selon la revendication 17 **caractérisée en ce que** le revêtement est un revêtement en poudre.

**28.** Composition de revêtement selon la revendication 17 **caractérisée en ce que** ladite composition est adaptée à la production de couche de revêtement de base ou de revêtement incolore ou de sous-couche dans un revêtement de finition incolore/coloré pour automobiles et camions.

**29.** Substrat revêtu d'une couche durcie sèche de la composition de revêtement selon la revendication 17.

**30.** Substrat d'automobile revêtu d'un revêtement multicouches durci sec **caractérisé en ce qu'**au moins une des couches de revêtement durcies sèches est la composition de revêtement selon la revendication 17.